# EUROPEAN PATENT APPLICATION

(11) **EP 3 150 826 A1**
(43) Date of publication of application: **05.04.2017**
(21) Application number: 16190110.3
(22) Date of filing: 22.09.2016
(51) Int. Cl.: F02C 7/045, B01D 45/08

(54) **VANE SEPARATORS WITH ACOUSTIC INSULATION**

(30) Priority: 30.09.2015 US 201514870859
(71) Applicant: General Electric Company, Schenectady, NY 12345 (US)
(72) Inventor: KIPPEL, Bradly Aaron, Greenville, SC South Carolina 29615 (US); ZHANG, Hua, Greenville, SC South Carolina 29615 (US)
(74) Representative: Lee, Brenda

(57) **Abstract**

The present application provides a vane separator system 100 for use with a gas turbine engine. The vane separator system 100 may include a number of vanes with a first vane 132, a second vane 134, a third vane 136, a fourth vane 138, and a fifth vane 140. The vane separator system 100 may include a number of vane flutes 160-172 separating the vanes, and a first acoustic insulator 180 positioned within a first vane flute.

## Description

The present application and resultant patent relate generally to gas turbine engines and more particularly relate to vane separators with acoustic insulation for attenuating noise and removing fluid from airstreams.

Gas turbine engines and other types of power generation equipment use a large volume of intake air to support the combustion process. Various types of inlet air filtration systems thus may be used upstream of the compressor. Incoming airstreams may contain fluid particles, such as water, that may affect performance of gas turbine engines or other power generation equipment. Such fluid particles may reduce the life expectancy and performance of the gas turbine engine and other types of power generation equipment. To avoid these problems, the inlet air may pass through a series of filters and screens to assist in removing the fluid particles from the airstream. Airstreams may also produce unwanted noise as the airstream flows through the inlet or other portion of the gas turbine engine or other power generation equipment. Generally, silencer baffles may be added to gas turbine engines or other power generation equipment to reduce noise created by the airstream and/or noise from other sources within the system (e.g., self-cleaning filters (if present), etc.). However, the addition of silencer baffles may have a relatively large footprint and may consume space within the gas turbine engine or other power generation equipment.

The present application and the resultant patent thus provide a vane separator system for use with a gas turbine engine. The vane separator system may include a number of vanes with a first vane, a second vane, a third vane, a fourth vane, and a fifth vane. The vane separator system may include a number of vane flutes separating the vanes, and a first acoustic insulator positioned within a first vane flute.

The present application and the resultant patent further provide a method of reducing noise and removing water from air. The method may include flowing an airstream at an inlet of a vane separator system including a number of vanes separated by vane flutes and a first acoustic insulator positioned within a first vane flute. At least one of the number of vanes may have a perforated sidewall. The method may include wicking water out of the airstream via the first acoustic insulator, directing a portion of the airstream to the first acoustic insulator through the perforated sidewall to reduce noise generated by the airstream and to remove water from the airstream, and draining the wicked water and the removed water.

The present application and the resultant patent further provide an inertial vane separator system for use at an inlet of a gas turbine engine. The vane separator system may include a first vane separated from a second vane by a first vane flute, a third vane separated from the second vane by a second vane flute, a fourth vane separated from the third vane by a third vane flute, a fifth vane separated from the fourth vane by a fourth vane flute, a first acoustic insulator positioned within the first vane flute, and a second acoustic insulator.

Various features and improvements of the present application and the resultant patent will become apparent to one of ordinary skill in the art upon review of the following detailed description when taken in conjunction with the several drawings and the appended claims.
FIG. 1 is a schematic diagram of a gas turbine engine showing a compressor, a combustor, a turbine, and a load.
FIG. 2 is a schematic diagram of an inlet air filtration system as may be used with the gas turbine engine of FIG. 2.
FIG. 3 is a schematic cross-sectional view of a vane separator system in accordance with one or more embodiments of the disclosure.
FIG. 4 is a schematic cross-sectional view of another embodiment of a vane separator system in accordance with one or more embodiments of the disclosure.

Certain embodiments of the disclosure include vane separator systems with acoustic insulation that may remove fluid particles, such as water, from an airstream. Embodiments of the disclosure may further reduce noise generated by airstreams flowing through vane separator systems. Embodiments of the disclosure may include acoustic insulation positioned between individual vanes. Some or all of the vanes may be perforated on one or both sidewalls or faces so as to facilitate airflow into or about the acoustic insulation. The acoustic insulation may be formed of a hydrophilic material, and may therefore wick fluid from the airstream, resulting in increased fluid drainage. Further, embodiments of the disclosure may increase airstream velocity through the vane separator system, resulting in improved inertial separation of fluid from the airstream. The acoustic insulation may further reduce noise by absorbing some or all of the noise generated by the airstream, which may reduce or remove a need for silencer baffles in systems as described herein. The acoustic vanes may further reduce noise by their shape and by eliminating a direct "line of sight" for noise to pass through a vane.

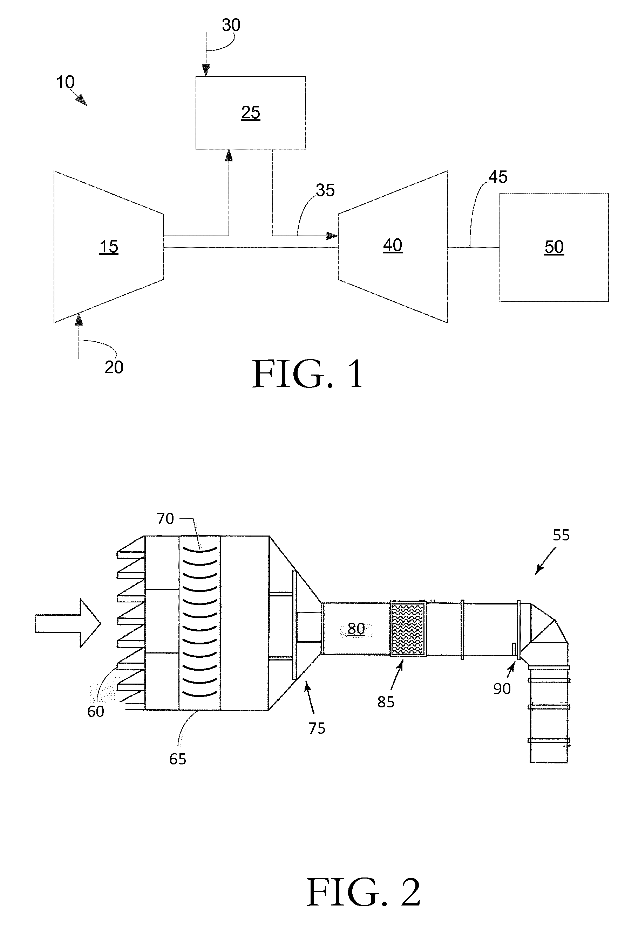

Referring now to the drawings, in which like numerals refer to like elements throughout the several views, FIG. 1 shows a schematic diagram of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25 arranged in a circumferential array or otherwise. The flow of combustion gases 35 is in turn delivered to a turbine 40. The flow of combustion gases 35 drives the turbine 40 so as to produce mechanical work. The mechanical work produced in the turbine 40 drives the compressor 15 via a shaft 45 and an external load 50 such as an electrical generator and the like.

The gas turbine engine 10 may use natural gas, liquid fuels, various types of syngas, and/or other types of fuels and blends thereof. The gas turbine engine 10 may be any one of a number of different gas turbine engines offered by General Electric Company of Schenectady, New York, including, but not limited to, those such as a 7 or a 9 series heavy duty gas turbine engine and the like. The gas turbine engine 10 may have different configurations and may use other types of components. Other types of gas turbine engines also may be used herein. Multiple gas turbine engines, other types of turbines, and other types of power generation equipment also may be used herein together.

FIG. 2 is a schematic diagram of a turbine inlet air system 55. The turbine inlet air system 55 may be integrated with the compressor 15 of the gas turbine engine 10 described above and the like. The turbine inlet air system 55 may include a weatherhood 60. The weatherhood 60 may prevent weather elements such as rain, snow, hail, and the like from the flow of air 20 from entering the compressor 15. The weatherhood 60 may be mounted on an inlet filter house 65.

The inlet filter house 65 may have a number of vane separators 70 mounted therein. The vane separators 70 may remove water from the incoming flow of air 20. A transition piece 75 may extend downstream of the inlet filter house 65 and extend into an inlet duct 80. The inlet duct 80 may extend to an inlet of the compressor 15. A silencer section 85 may be included to reduce noise generated by the incoming flow of air 20. One or more screens 90 may be included to deflect contaminants and/or debris. The turbine inlet air system 55 described herein is for the purpose of example only. Turbine inlet air systems of many other configurations and with many different components also may be known.

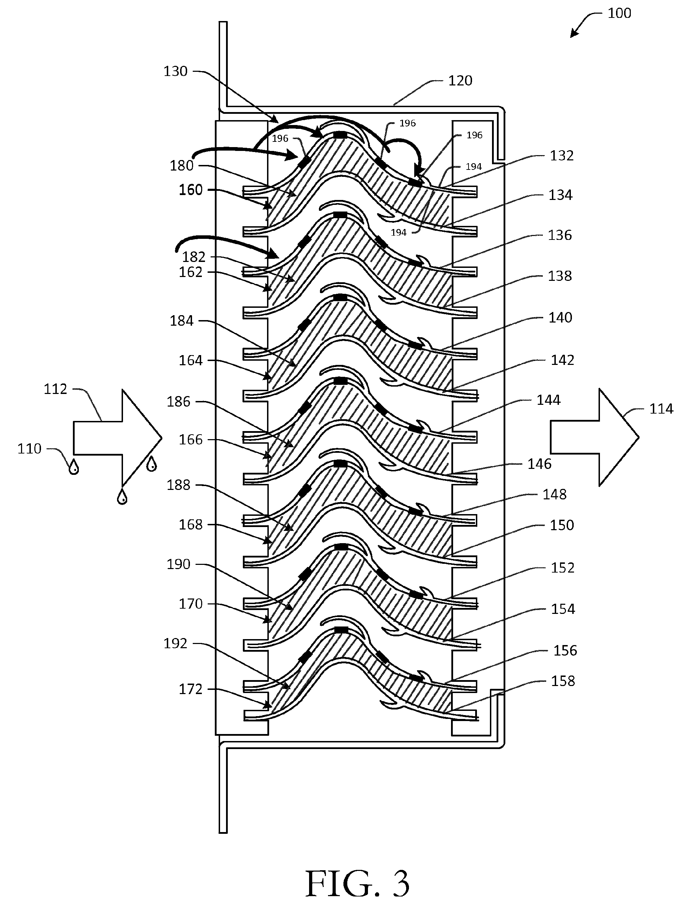

Referring to FIG. 3, a vane separator system 100 in accordance with one or more embodiments of the disclosure is depicted in cross-sectional view. The vane separator system 100 may be positioned at an inlet of a gas turbine engine or another power generation or ventilation system. For example, the vane separator system 100 may be positioned at a weatherhood (or instead of a weatherhood) of a turbine inlet air system. The vane separator system 100 may remove fluid 110, such as water, from an incoming airstream 112, and may also reduce noise by the airstream as the airstream flows through the vane separator system 100 and/or the gas turbine system or other system that includes the vane separator system 100. As a result, an airstream flow 114 exiting the vane separator system 100 may have a reduced amount or volume of fluid than the incoming airstream 112.

The vane separator system 100 may include a number of vanes 130 positioned within a housing 120. For example, the vane separator system 100 may include a first vane 132, a second vane 134, a third vane 136, a fourth vane 138, a fifth vane 140, a sixth vane 142, a seventh vane 144, and so forth. The second vane 134 may be positioned in between the first vane 132 and the third vane 136, and the fourth vane 138 may be positioned in between the third vane 136 and the fifth vane 140. The vanes 130 may be shaped such that the airstream cannot flow linearly through the vane separator system 100. For example, in the illustration of FIG. 3, the vanes 130 may be shaped with non-planar contoured sidewalls, such that the airstream flows in a curved path about individual vanes. Some or all of the vanes 130 of the vane separator system 100 may have the same shape or geometry, while in other embodiments, some or all of the vanes 130 may have different shapes or geometries. Because the vanes 130 redirect the flow of the airstream, noise generated by the airstream may be reduced and insertion loss may be enhanced. Noise reduction and/or insertion loss may be due to no or limited "line of sight" through vane openings. In some embodiments, some or all of the vanes 130 may be treated with a sound damping coating to increase acoustic attenuation.

The vanes 130 may be separated by a number of vane flutes. Vane flutes may be a gap or opening between vanes through which the airstream 112 may flow, or may otherwise be spaces between vanes. For example, the vane separator system 100 may include a first vane flute 160. The first vane flute 160 may separate the first vane 132 and the second vane 134. Another vane flute may separate the second vane 134 and the third vane 136, and so forth.

An acoustic insulator may be positioned within one or more of the vane flutes. For example, one or more vane flutes may be filled or partially filled with an acoustic insulator. In some embodiments, alternating ones, or every other vane flute of the vane separator system may include an acoustic insulator. In other embodiments, every third vane flue of the vane separator system may include an acoustic insulator. The acoustic insulators in the vane flutes may each be formed from the same material or from different materials.

In the vane separator system 100 of FIG. 3, a first acoustic insulator 180 may be positioned within the first vane flute 160. The first acoustic insulator 180 may wick, absorb, or otherwise remove fluid, such as water, from the airstream 112. The first acoustic insulator 180 may further drain the removed fluid from the vane separator system 100. In some instances, the first acoustic insulator 180 may absorb or dampen sound and/or noise as the airstream flows about the first acoustic insulator 180. The first acoustic insulator 180 may be water tolerate and/or hydrophilic. For example, the first acoustic insulator 180 may be formed of, or include, a material that is attracted to or attracts water. In other examples, the first acoustic insulator 180 may be treated with a hydrophilic treatment. In certain embodiments, the first acoustic insulator 180 may include fiberglass or polyethylene terephthalate (PET) materials.

The vane separator system 100 may include acoustic insulators in every second vane flute. For example, the vane separator 100 may include a second acoustic insulator 182 positioned within a second vane flute 162 between the third vane 136 and the fourth vane 138. The vane separator 100 may further include a third acoustic insulator 184 positioned within a third vane flute 164 between the fifth vane 140 and the sixth vane 142. The vane separator 100 may further include a fourth acoustic insulator 186 positioned within a fourth vane flute 166 between the seventh vane 144 and an eighth vane 146. The vane separator 100 may further include a fifth acoustic insulator 188 positioned within a fifth vane flute 168 between the ninth vane 148 and a tenth vane 150. The vane separator 100 may further include a sixth acoustic insulator 190 positioned within a sixth vane flute 170 between an eleventh vane 152 and a twelfth vane 154. The vane separator 100 may further include a seventh acoustic insulator 192 positioned within a seventh vane flute 172 between a thirteenth vane 156 and a fourteenth vane 158.

Some or all of the vanes 130 of the vane separator system 100 may include perforated sidewalls. Perforated sidewalls may include openings in a sidewall of the respective vane. Portions of the airstream 112 may flow through perforations in vane sidewalls. Perforations may be defined as a percentage of open area and may form certain patterns. In some instances, perforations in vane sidewalls may facilitate flow of fluid and/or noise into acoustic insulators.

In FIG. 3, the first vane 132 may have perforated sidewalls. Specifically, the first vane 132 may have sidewalls 194. The sidewalls 194 may include one or more perforations 196 that may be spaced across the respective sidewalls 194. The perforations 196 may extend through a thickness of the first vane 132. The incoming airstream 112 may therefore flow about the sidewall 194, through the perforations 196, and into the first acoustic insulator 180. As a result, the first acoustic insulator 180 may absorb or wick fluid from the airstream 112, and may also reduce or dampen noise generated by the airstream 112 or elsewhere in the system. Because the acoustic insulators may be formed of materials that may absorb and/or wick fluid, noise and fluid absorbed by the acoustic insulator may be prevented from seeping out of the sidewall perforations and returning to the airstream.

In the embodiment of FIG. 3, vanes in contact with an acoustic insulator may have perforated sidewalls. Specifically, because an acoustic insulator is positioned in every second vane flute in FIG. 3, every second vane may have perforated sidewalls. For example, the third vane 136, the fifth vane 140, the seventh vane 144, the ninth vane 148, the eleventh vane 152, and the thirteenth vane 156 may each have perforated sidewalls, so as to facilitate moisture and sound absorption by the acoustic insulators. While not illustrated, in some embodiments, each vane may have perforated sidewalls. Further, some vanes may have different perforation patterns than other vanes.

The vanes without perforations in FIG. 3 may have solid sidewalls. In some embodiments, each one of the vanes 130 may be treated with a sound deadening coating to reduce noise and enhance acoustic attenuation. In other embodiments, only vanes with solid sidewalls may be treated with a sound deadening coating. In FIG. 3, the second vane 134, the fourth vane 138, the sixth vane 142, the eighth vane 146, the tenth vane 150, the twelfth vane 154, and the fourteenth vane 158 may have solid sidewalls.

The acoustic insulators of FIG. 3 may block the flow of the airstream 112 through certain vane flutes, which may increase a velocity of the airstream 112 through vane flutes without the acoustic insulators. The increased velocity may result in improved removal of fluid from the airstream via inertial separation. Further, the acoustic material may absorb or dampen noise generated by the airstream 112, thereby reducing or removing a need for separate silencer baffles in the system.

An example method of using the vane separator system 100 may include flowing the airstream 112 at an inlet of the vane separator system 100. The vane separator system 100 may include the vanes 130 separated by vane flutes, as well as a first acoustic insulator 180 positioned within a first vane flute 160. The first vane 132 may have a perforated sidewall. The method may include wicking water out of the airstream 112 via the first acoustic insulator 180 and directing a portion of the airstream 112 to the first acoustic insulator 180 through the perforated sidewall to reduce noise generated by the airstream and to remove water from the airstream 180, and draining the wicked water and the removed water.

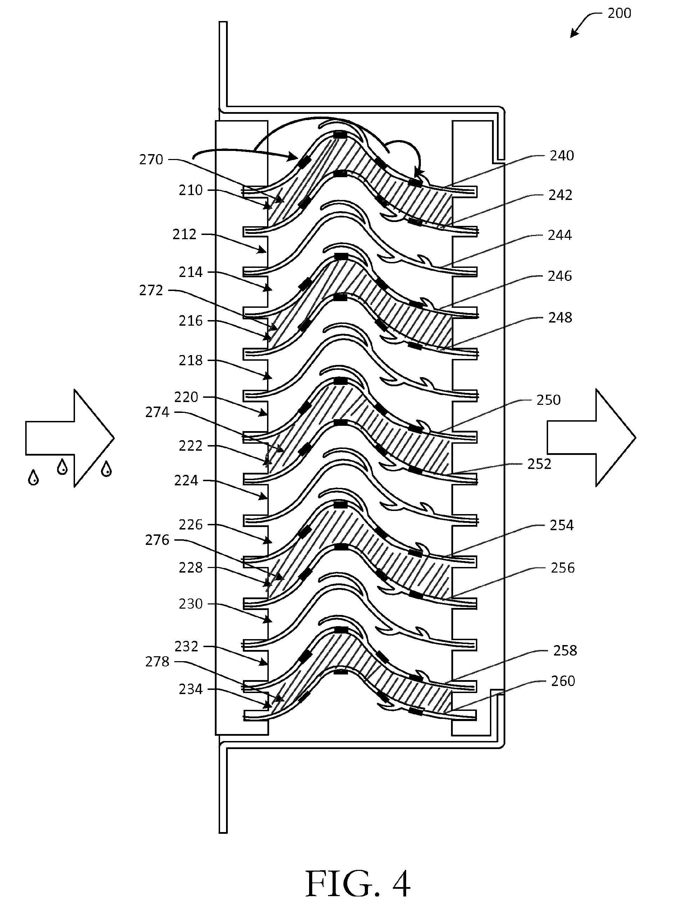

Referring to FIG. 4, another embodiment of a vane separator system 200 in accordance with one or more embodiments of the disclosure is depicted. The vane separator 200 may be similar to the vane separator system 100 of FIG. 3; however, the arrangement of acoustic insulators, as well as the arrangement and placement of vanes with perforated sidewalls may be different.

In the vane separator system 200 of FIG. 4, an acoustic insulator may be positioned about every third vane flute. Specifically, the vane separator system 200 may include a first vane flute 210 positioned between a first vane 240 and a second vane 242. A first acoustic insulator 270 may be positioned about the first vane flute 210. In some embodiments, the first acoustic insulator 250 may fill the first vane flute 210. The first acoustic insulator 270 may be the same as the acoustic insulators of FIG. 3 in that the first acoustic insulator 270 may be hydrophilic or formed from fiberglass or PET materials.

A second vane flute 212 and a third vane flute 214 may be empty or may otherwise not have an acoustic insulator positioned therein. The second vane flute 212 may separate the second vane 242 and a third vane 244. The third vane flute 214 may separate the third vane 244 and a fourth vane 246, and so forth.

The vane separator system 200 may include a second acoustic insulator 272 positioned about a fourth vane flute 216. The fourth vane flute 216 may be between the fourth vane 246 and a fifth vane 248. A fifth vane flute 218 and a sixth vane flute 220 may not include acoustic insulators.

The vane separator system 200 may include a third acoustic insulator 274 positioned about a seventh vane flute 222. The seventh vane flute 222 may be between a seventh vane 250 and an eighth vane 252. An eighth vane flute 224 and a ninth vane flute 226 may not include acoustic insulators.

The vane separator system 200 may include a fourth acoustic insulator 276 positioned about a tenth vane flute 228. The tenth vane flute 228 may be between a tenth vane 254 and an eleventh vane 256. An eleventh vane flute 230 and a twelfth vane flute 232 may not include acoustic insulators.

The vane separator system 200 may include a fifth acoustic insulator 278 positioned about a thirteenth vane flute 234. The thirteenth vane flute 234 may be between a thirteenth vane 258 and a fourteenth vane 260.

In the embodiment of FIG. 4, vanes in contact with or adjacent to the acoustic insulators may have perforated sidewalls. The vanes that are not in contact with the acoustic insulators may have solid sidewalls. For example, the first vane 240, the second vane 242, the fourth vane 246, the fifth vane 248, the seventh vane 250, the eighth vane 252, the tenth vane 254, the eleventh vane 256, the thirteenth vane 258, and the fourteenth vane 260 may have perforated sidewalls, while the remaining vanes may have solid sidewalls. The perforations may allow noise to enter the acoustic insulation and may allow fluid to enter for increased drainage. The vanes with solid sidewalls may reflect noise.

The vane separator systems described herein may provide improved inertial separation of fluid from an airstream, while reducing noise generated by the airstream. Water drainage capacity of vanes may be improved, resulting in an ability to operate at higher velocities without water shedding. Noise generated by airstreams may travel in the direction of airflow or in the opposite direction. Embodiments of the disclosure may reduce noise upstream and/or downstream of the vane separator systems described herein. Embodiments of the disclosure may have a compact footprint and be manufactured at a relatively low cost.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

Various aspects and embodiments of the present invention are defined by the following numbered clauses:
1. A vane separator system comprising:
   a plurality of vanes;
   a plurality of vane flutes separating the plurality of vanes; and
   a first acoustic insulator positioned within a first vane flute of the plurality of vane flutes.
2. The vane separator system of clause 1, wherein the plurality of vanes comprises a second vane positioned in between a first vane and a third vane, and a fourth vane positioned in between a third vane and a fifth vane, the vane separator system further comprising:
   a second acoustic insulator positioned within a second vane flute of the plurality of vane flutes;
   wherein the first vane flute separates the first vane and the second vane; and
   the second vane flute separates the third vane and the fourth vane.
3. The vane separator system of any preceding clause, wherein:
   the plurality of vanes comprises a first vane, a second vane, a third vane, a fourth vane, and a fifth vane;
   the first vane, the third vane, and the fifth vane comprise perforated sidewalls; and
   the second vane and the fourth vane comprise solid sidewalls.
4. The vane separator system of any preceding clause, wherein each of the plurality of vanes comprises a perforated sidewall.
5. The vane separator system of any preceding clause, the plurality of vanes comprises a second vane positioned in between a first vane and a third vane, and a fourth vane positioned in between a third vane and a fifth vane, and wherein:
   the first vane, the third vane, and the fifth vane comprise perforated sidewalls; and
   the second vane and the fourth vane comprise solid sidewalls.
6. The vane separator system of any preceding clause, wherein at least one of the plurality of vanes comprises a sidewall treated with a sound deadening coating.
7. The vane separator system of any preceding clause, wherein the first acoustic insulator is water tolerate.
8. The vane separator system of any preceding clause, wherein the first acoustic insulator comprises a hydrophilic treatment.
9. The vane separator system of any preceding clause, wherein the plurality of vanes comprises a second vane positioned in between a first vane and a third vane, and a fourth vane positioned in between a third vane and a fifth vane, the vane separator system further comprising:
   a second acoustic insulator positioned within a second vane flute of the plurality of vane flutes;
   wherein the first vane flute separates the first vane and the second vane; and
   the second vane flute separates the fourth vane and the fifth vane.
10. The vane separator system of any preceding clause, wherein:
   the plurality of vanes comprises a first vane, a second vane, a third vane, a fourth vane, and a fifth vane;
   the first vane, the second vane, the fourth vane, and the fifth vane comprise perforated sidewalls; and
   the third vane comprises a solid sidewall.
11. The vane separator system of any preceding clause, further comprising:
   a second acoustic insulator positioned within a second vane flute of the plurality of vane flutes;
   wherein:
   the plurality of vanes comprises a first vane, a second vane, a third vane, a fourth vane, and a fifth vane;
   the first vane, the second vane, the fourth vane, and the fifth vane comprise perforated sidewalls and the third vane comprises a solid sidewall.
12. The vane separator system of any preceding clause, wherein each of the plurality of vanes has a geometry configured to prevent noise from passing directly through a vane opening.
13. The vane separator system of any preceding clause, wherein the first acoustic insulator comprises fiberglass or polyethylene terephthalate material.
14. The vane separator system of any preceding clause, wherein alternating ones of the plurality of vanes are perforated.
15. A method of reducing noise and removing water from air comprising:
   flowing an airstream at an inlet of a vane separator system comprising a plurality of vanes separated by a plurality of vane flutes and a first acoustic insulator positioned within a first vane flute of the plurality of vane flutes, wherein at least one of the plurality of vanes comprises a perforated sidewall;
   wicking water out of the airstream via the first acoustic insulator;
   directing a portion of the airstream to the first acoustic insulator through the perforated sidewall to reduce noise generated by the airstream and to remove water from the airstream; and
   draining the wicked water and the removed water.
16. An inertial vane separator system comprising:
   a first vane separated from a second vane by a first vane flute;
   a third vane separated from the second vane by a second vane flute;
   a fourth vane separated from the third vane by a third vane flute;
   a fifth vane separated from the fourth vane by a fourth vane flute;
   a first acoustic insulator positioned within the first vane flute; and
   a second acoustic insulator.
17. The inertial vane separator system of any preceding clause, wherein the second acoustic insulator is positioned within the third vane flute, and the second vane flute and the fourth vane flute comprise open gaps.
18. The inertial vane separator system of any preceding clause, wherein the second acoustic insulator is positioned within the fourth vane flute, and the second vane flute and the third vane flute comprise open gaps.
19. The inertial vane separator system of any preceding clause, wherein each of the vanes comprises a perforated sidewall.
20. The inertial vane separator system of any preceding clause, wherein alternating ones of the vane flutes comprise an acoustic insulator.

## Claims

1. A vane separator system (100) comprising:
a plurality of vanes (132-140);
a plurality of vane flutes (160-172) separating the plurality of vanes; and
a first acoustic insulator (180) positioned within a first vane flute of the plurality of vane flutes.

2. The vane separator system (100) of claim 1, wherein the plurality of vanes comprises a second vane positioned in between a first vane and a third vane, and a fourth vane positioned in between a third vane and a fifth vane, the vane separator system further comprising:
a second acoustic insulator positioned within a second vane flute of the plurality of vane flutes;
wherein the first vane flute separates the first vane and the second vane; and
the second vane flute separates the third vane and the fourth vane.

3. The vane separator system (100) of any preceding claim, wherein:
the plurality of vanes comprises a first vane, a second vane, a third vane, a fourth vane, and a fifth vane;
the first vane, the third vane, and the fifth vane comprise perforated sidewalls; and
the second vane and the fourth vane comprise solid sidewalls.

4. The vane separator system (100) of any preceding claim, wherein each of the plurality of vanes comprises a perforated sidewall.

5. The vane separator system (100) of any preceding claim, the plurality of vanes comprises a second vane positioned in between a first vane and a third vane, and a fourth vane positioned in between a third vane and a fifth vane, and wherein:
the first vane, the third vane, and the fifth vane comprise perforated sidewalls; and
the second vane and the fourth vane comprise solid sidewalls.

6. The vane separator system (100) of any preceding claim, wherein at least one of the plurality of vanes comprises a sidewall treated with a sound deadening coating.

7. The vane separator system (100) of any preceding claim, wherein the first acoustic insulator is water tolerate.

8. The vane separator system (100) of any preceding claim, wherein the first acoustic insulator comprises a hydrophilic treatment.

9. The vane separator system (100) of any preceding claim, wherein the plurality of vanes comprises a second vane positioned in between a first vane and a third vane, and a fourth vane positioned in between a third vane and a fifth vane, the vane separator system further comprising:
a second acoustic insulator positioned within a second vane flute of the plurality of vane flutes;
wherein the first vane flute separates the first vane and the second vane; and
the second vane flute separates the fourth vane and the fifth vane.

10. The vane separator system (100) of claim 8, wherein:
the plurality of vanes comprises a first vane, a second vane, a third vane, a fourth vane, and a fifth vane;
the first vane, the second vane, the fourth vane, and the fifth vane comprise perforated sidewalls; and
the third vane comprises a solid sidewall.

11. The vane separator system (100) of any preceding claim, further comprising:
a second acoustic insulator positioned within a second vane flute of the plurality of vane flutes;
wherein:
the plurality of vanes comprises a first vane, a second vane, a third vane, a fourth vane, and a fifth vane;
the first vane, the second vane, the fourth vane, and the fifth vane comprise perforated sidewalls and the third vane comprises a solid sidewall.

12. The vane separator system (100) of any preceding claim, wherein each of the plurality of vanes has a geometry configured to prevent noise from passing directly through a vane opening.

13. The vane separator system (100) of any preceding claim, wherein the first acoustic insulator comprises fiberglass or polyethylene terephthalate material.

14. The vane separator system (100) of any preceding claim, wherein alternating ones of the plurality of vanes are perforated.
